# EUROPÄISCHE PATENTANMELDUNG

(11) **EP 2 208 896 A1**
(43) Veröffentlichungstag der Anmeldung: **21.07.2010**
(21) Anmeldenummer: 10401003.8
(22) Anmeldetag: 11.01.2010
(51) Int. Cl.: F16B 13/14

(54) **Ankerhülse**

(30) Priorität: 16.01.2009 DE 102009004921
(71) Anmelder: fischerwerke GmbH & Co. KG, 72178 Waldachtal (DE)
(72) Erfinder: Schlenk, Christian, 79211 Denzlingen (DE)

(57) **Zusammenfassung**

Die Erfindung betrifft eine Ankerhülse (1) zur chemischen Verankerung einer Ankerstange in einem Bohrloch. Die Erfindung schlägt vor, die Ankerhülse (1) mit einer in Längsrichtung verlaufenden Fuge (3) auszubilden, die von einer Fugenüberbrückung (4) überbrückt ist. Durch eine Faltung (5) ist die Fugenüberbrückung (4) quer zur Fuge (3) längenveränderlich. Die Ankerhülse (1) ist durch elastisches Zusammendrücken oder Aufweiten an unterschiedliche Durchmesser anpassbar.

## Beschreibung

Die Erfindung betrifft eine Ankerhülse zur chemischen Verankerung einer Ankerstange in einem Bohrloch mit den Merkmalen des Oberbegriffs des Anspruchs 1.

Chemische Verankerung bedeutet die Befestigung einer Ankerstange mittels einer aushärtenden Masse, beispielsweise eines Ein- oder Mehrkomponenten-Klebers oder -Mörtels. Die Ankerstange kann beispielsweise eine Gewindestange, ein sog. Dywidag-Stab oder eine spezielle Ankerstange mit einer Anzahl in Linie angeordneter Kegelstümpfe sein. Zum Fixieren und Zentrieren der Ankerstange in einem Bohr- oder sonstigen Loch sind Ankerhülsen bekannt, die Austrittsöffnungen für die aushärtende Masse aufweisen. Ihre Umfangswand ist beispielsweise perforiert oder siebartig. Die Ankerhülse wird in das Bohrloch eingebracht und es wird die aushärtende Masse in die Ankerhülse eingebracht. Anschließend wird die Ankerstange in die Ankerhülse eingebracht und verdrängt die aushärtende Masse, so dass diese durch die Austrittsöffnungen austritt und die Ankerstange nach dem Aushärten im Bohrloch hält. Ein Beispiel einer derartigen Ankerhülse offenbart das Gebrauchsmuster DE 296 06 215 U1.

Zur Anpassung an unterschiedliche Durchmesser offenbart die Patentschrift CH 669 017 A5 eine perforierte und dadurch Austrittsöffnungen aufweisende Folie. Entsprechend dem Bohrlochdurchmesser bzw. ?umfang wird ein Stück von der Folie abgetrennt und zu einem Rohr gerollt, wobei Ränder der Folie einander überlappen und mit einem druckknopfartigen Verschluss verbunden werden.

Aufgabe der Erfindung ist, eine konstruktiv anders ausgestaltete Ankerhülse vorzuschlagen, die sich an unterschiedliche Durchmesser anpasst.

Diese Aufgabe wird erfindungsgemäß durch die Merkmale des Anspruchs 1 gelöst. Die erfindungsgemäße Ankerhülse weist eine in Längsrichtung verlaufende Fuge auf, also einen Spalt, wobei die Fuge auch in einem Winkel zur Längsrichtung beispielsweise wendelförmig oder auch wellen-, mäander- oder zick-zack-förmig verlaufen kann. Durch die Fuge lässt sich die Ankerhülse auf einen kleineren Durchmesser insbesondere elastisch zusammendrücken oder auch auf einen größeren Durchmesser aufweiten. Die Fuge kann beispielsweise eine Stoßfuge sein, d.h. einander zugewandte Fugenränder der Ankerhülse befinden sich auf einer gemeinsamen, gedachten Zylinderfläche, wobei sie je nach Durchmesser einen mehr oder weniger großen Abstand voneinander aufweisen oder aneinander anliegen. Auch eine Überlappung der Fugenränder ist möglich, wobei sich die Überlappung bei kleinerem Durchmesser vergrößert. Um einen unkontrollierten und übermäßigen Austritt der aushärtenden Masse durch die Fuge zu vermeiden, weist die Ankerhülse eine Fugenüberbrückung auf, die die Fuge überbrückt. Die Fugenüberbrückung überdeckt die Fuge der Ankerhülse innen und/oder außen. Die Fugenüberbrückung kann Austrittsöffnungen für die aushärtende Masse aufweisen, beispielsweise siebartig oder perforiert sein. Auch ist eine geschlossene Fugenüberbrückung ohne Austrittsöffnungen möglich. Die Fugenüberbrückung verhindert einen freien Austritt der aushärtbaren Masse aus der Ankerhülse durch die Fuge. Ein Austritt der Masse im Bereich der Fuge ist nur durch die Austrittsöffnungen der Fugenüberbrückung möglich, sofern die Fugenüberbrückung Austrittsöffnungen aufweist. Die Fugenüberbrückung ist quer zur Fuge zur Anpassung an die Größe der Fuge und damit zur Anpassung an den Durchmesser der Ankerhülse längenveränderlich. Zu diesem Zweck kann die Fugenüberbrückung biegeschlaff oder elastisch und/oder plastisch verformbar und/oder dehnbar sein. Eine Ausgestaltung der Erfindung sieht eine Faltung der Fugenüberbrückung zur Anpassung an unterschiedliche Fugenbreiten vor.

Um zu vermeiden, dass die aushärtende Masse beim Einbringen in die Ankerhülse und insbesondere beim anschließenden Einbringen der Ankerstange in die Ankerhülse ungehindert an einem Ende aus der Ankerhülse austritt, sieht eine Ausgestaltung der Erfindung einen Boden an einem Ende der Ankerhülse vor. Zur Anpassung an unterschiedliche Durchmesser setzt sich die Fuge der Ankerhülse in den Boden hinein fort. Im Boden hat die Fuge beispielsweise die Form eines Kreissektors. Eine andere Möglichkeit zur Durchmesseranpassung ist die Ausbildung des Bodens als einander schuppenartig überlappende Segmente, deren Überlappung sich bei Verkleinerung des Durchmessers vergrößert und umgekehrt. Die Segmente des Bodens sind an sich keine Kreissegmente, sondern beispielsweise Kreissektoren oder Streifen oder weisen eine andere Form auf.

Die Erfindung wird nachfolgend anhand in der Zeichnung dargestellter Ausführungsbeispiele näher erläutert. Es zeigen:
- Figur 1: eine Ankerhülse gemäß der Erfindung in perspektivischer Darstellung;
- Figur 2: eine Stirnansicht der Ankerhülse gemäß Pfeil II in Figur 1; und
- Figur 3: eine abgewandelte Ankerhülse gemäß der Erfindung in einer Figur 2 entsprechenden Stirnansicht.

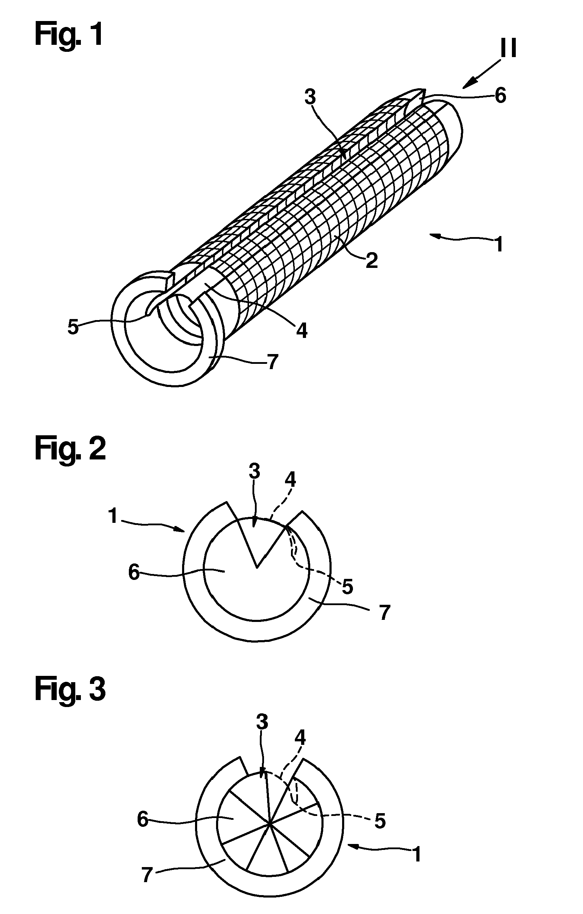

Die in Figur 1 dargestellte erfindungsgemäße Ankerhülse 1 dient zu einer chemischen Verankerung, d.h. zur Befestigung einer nicht dargestellten Ankerstange, beispielsweise einer Gewindestange, in einem Bohrloch mit einer aushärtenden Masse. Die aushärtende Masse ist beispielsweise ein Ein- oder Mehrkomponenten-Klebstoff oder -Kunstharz oder sonstiger Mörtel. Die Ankerhülse 1 ist ein einstückig durch Spritzgießen aus Kunststoff hergestelltes, rohrförmiges Teil, dessen Umfangswand perforiert, beispielsweise siebartig ist und dadurch Austrittsöffnungen 2 für die aushärtbare Masse aufweist. In Umfangsrichtung ist die Ankerhülse 1 nicht ganz geschlossen, sondern weist eine in Längsrichtung verlaufende, durchgehende Fuge 3 auf, so dass die Ankerhülse 1 zur Anpassung an unterschiedliche Durchmesser elastisch zusammendrück- oder aufweitbar ist. Die Fuge 3 wird von einer folienartigen Fugenüberbrückung 4 überbrückt und ist dadurch immer geschlossen, auch wenn Fugenränder einen Abstand voneinander aufweisen. Die Fugenüberbrückung 4 weist eine Faltung 5 auf, so dass sie quer zur Fuge 3 längenveränderlich ist zur Anpassung an unterschiedliche Durchmesser der Ankerhülse 1, die unterschiedliche Breiten der Fuge 3 bedingen. Die Fugenüberbrückung 4 weist wie die Umfangswand der Ankerhülse 1 eine Perforierung zur Ausbildung von Austrittsöffnungen für die aushärtbare Masse auf.

An einem, hier als vorderen bezeichneten Ende weist die Ankerhülse 1 einen Boden 6 (siehe Figur 2), am anderen, hier als hinteren bezeichneten Ende weist die Ankerhülse 1 einen nach außen abstehenden Flansch 7 auf. Die Fuge 3 setzt sich in den Boden 6 hinein fort und weist im Boden 6 die Form eines Kreissektors auf. Dadurch passt sich der Boden 6 an den Durchmesser der Ankerhülse 1 an. Der Flansch 7 begrenzt eine Einstecktiefe der Ankerhülse 1 in ein Bohrloch.

Zur chemischen Verankerung einer hier nicht dargestellten Ankerstange wird die Ankerhülse 1 mit ihrem vorderen, den Boden 6 aufweisenden Ende voran in ein ebenfalls nicht dargestelltes Bohrloch gesteckt, bis der Flansch 7 an einer Bohrlochmündung aufliegt. Anschließend wird eine aushärtbare Masse, beispielsweise ein Kunstharzmörtel, durch das offene, hintere Ende in die Ankerhülse 1 injiziert und danach die Ankerstange in die Ankerhülse 1 eingebracht. Die Ankerstange verdrängt die aushärtbare Masse, so dass diese durch die Austrittsöffnungen 2 in der Umfangswand der Ankerhülse 1 und in der Fugenüberbrückung 4 austritt und nach dem Aushärten die Ankerstange im Bohrloch verankert, d.h. hält.

Figur 3 zeigt eine abgewandelte Ausführungsform des Bodens 6 der Ankerhülse 1. Hier weist der Boden 6 kreissektorförmige Segmente auf, die einander überlappen. Die Überlappung vergrößert sich beim Zusammendrücken der Ankerhülse 1 auf einen kleineren Durchmesser und verkleinert sich beim Aufweiten der Ankerhülse 1 auf einen größeren Durchmesser. Im Übrigen ist die in Figur 3 dargestellte Ankerhülse 1 gleich ausgebildet wie diejenige aus Figuren 1 und 2 und funktioniert in gleicher Weise. Zur Erläuterung von Figur 3 werden die Ausführungen zu Figuren 1 und 2 in Bezug genommen.

## Patentansprüche

1. Ankerhülse zur chemischen Verankerung einer Ankerstange in einem Bohrloch, wobei die Ankerhülse (1) Austrittsöffnungnen (2) für eine aushärtende Masse aufweist, **dadurch gekennzeichnet, dass** die Ankerhülse (1) eine in Längsrichtung verlaufende Fuge (3) aufweist, die von einer quer zur Fuge (3) längenveränderlichen Fugenüberbrückung (4) überbrückt ist.

2. Ankerhülse nach Anspruch 1, **dadurch gekennzeichnet, dass** die Fugenüberbrückung (4) eine Faltung (5) aufweist.

3. Ankerhülse nach Anspruch 1, **dadurch gekennzeichnet, dass** die Ankerhülse (1) einen Boden (6) aufweist, in den hinein sich die Fuge (3) fortsetzt.

4. Ankerhülse nach Anspruch 1, **dadurch gekennzeichnet, dass** die Ankerhülse (1) einen Boden (6) mit einander schuppenartig überlappenden Segmenten aufweist.
